Europäisches Patentamt

European Patent Office

Office européen des brevets

(11) Publication number: **0 193 657**
**B1**

(12) **EUROPEAN PATENT SPECIFICATION**

(45) Date of publication of patent specification: **07.06.89**

(51) Int. Cl.⁴: **G 01 N 21/55,** G 01 N 21/89

(21) Application number: **85202112.0**

(22) Date of filing: **19.12.85**

(54) **Optical sensor.**

(30) Priority: **10.01.85 SE 8500108**

(43) Date of publication of application:
**10.09.86 Bulletin 86/37**

(45) Publication of the grant of the patent:
**07.06.89 Bulletin 89/23**

(84) Designated Contracting States:
**DE FR GB IT SE**

(56) References cited:
**GB-A-1 416 198**
**GB-A-2 066 482**
**US-A-4 092 068**

(73) Proprietor: **Philips Norden AB**
**Tegeluddsvägen 1**
**S-11584 Stockholm (SE)**
(84) **SE**

(73) Proprietor: **N.V. Philips' Gloeilampenfabrieken**
**Groenewoudseweg 1**
**NL-5621 BA Eindhoven (NL)**
(84) **DE FR GB IT**

(72) Inventor: **Willgert, Mikael**
**c/o INT. OCTROOIBUREAU B.V. Prof. Holstlaan 6**
**NL-5656 AA Eindhoven (NL)**

(74) Representative: **Cuppens, Hubertus Martinus**
**Maria et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The present invention refers to an optical sensor comprising a radiation emitting element, a guide plate, a reflector disposed in connection with the guide plate and a radiation detecting element which elements and reflector cooperate in order to determine a reference position or reference positions of an object, such as a paper sheet, which is transportable along the guide plate in the space between the guide plate and the two elements, the stepwise radiation variations detected by the radiation detecting element indicating the reference positions on the basis of which the object may be adjusted in position.

Such a sensor is essentially disclosed in the GB Patent Specification 1 416 198. According to the figures 11 and 12 the reflector has a flat inclined surface relative to the transport direction of the object. This prevents the reflector from damage caused by scratching of document. Furthermore, dust from the object and its environments may mot effect the reflector to a significant extent because the dust is free to leave the reflector under the influence of the gravity force.

However, this prior art sensor shows a disadvantage in that the sensor does not provide sufficient accuracy. To overcome this disadvantage prior art sensors of high accuracy have been provided with one and most often two slots, one being disposed between the radiation emitting element and the other between the reflector and the radiation detecting element. A sensor having these slots is rather complicated to manufacture. The sensor comprises several components and the alignment of the comprised components is rather critical. Due to the complexity in manufacturing, the sensor is expensive.

The invention has for its object to provide a sensor which has a high accuracy and is easy and cheap to manufacture. According to the invention the sensor is characterized in that the reflector is provided in the guide plate and consists of a sunk convex reflecting edge in the guide plate. By means of the convex reflecting edge, the radition from the radiation emitting element is more diverged when leaving the reflector than it would be if a flat inclined reflector was used. This means that the radiation detecting element detects radiation coming from a less wide area of the reflector than when the reflector consists of a flat inclined surface. The amount of radiation detected by the radiation detecting element in the case of a convex reflector is thus less than the corresponding radiation detected in the case of a flat inclined reflector. However, it has turned out that this reduction in the amount of radiation does not adversely effect the detection of the stepwise variation of the radiation. The less wide area of the reflector contributing to radiation detected by the radiation detecting element thus imply a more accurate detection of the position of the object.

The sensor according to the invention, does not need any slots and the mounting of the respective components is not critical. The components do not need to be aligned with one particular surface area of the reflector, but several areas of the reflector are as usable as the particular one. This of course to a great extent contributes to a simple mounting of the sensor.

It is to be noted that reduction of the width of the surface in the case of a flat inclined reflector to be width which gives rise to an accuracy as in the case of the convex reflector hardly would be possible. The alignment of the respective components would be almost impossible and if the alignment was succeeded a slight temperature change or push would lead to a misalignment.

The reflecting convex edge may consist of the real passage between a closed and an open area, e.g., a limiting surface of an opening. The passage to an open area adjacent to the convex edge prevents the edge from being filled with dust. The convex edge used for the reflection of the radiation towards the radiation detecting element is somewhat sunk relative to the environment and hereby it is prevented that an object transported above the passage between a closed and an open area scratches the convex edge. The convex edge is also easy to embody by means of, e.g., punching followed by a smoothing.

According to a preferred embodiment of the sensor, in which the radiation detecting element is surrounded by an envelope having an opening for the incident radiation to be detected, the sensor is further characterized in that the envelope of the radiation detecting element is so disposed adjacent to the radiation emitting element that the radiation from the radiation emitting element is prevented from directly inclining towards a section of the convex edge situated more distant from the open area than a section reflecting the radiation towards the opening of the radiation detecting element. Such an embodiment increases the safety in the radiation detection.

According to a further preferred embodiment the sensor is characterized in that the opening of the envelope of the radiation detecting element has an elongated shape, the elongated direction being parallel to the longitudinal direction of the convex edge. This shape admits the quantity of detected radiation to be increased without renounce the position accuracy.

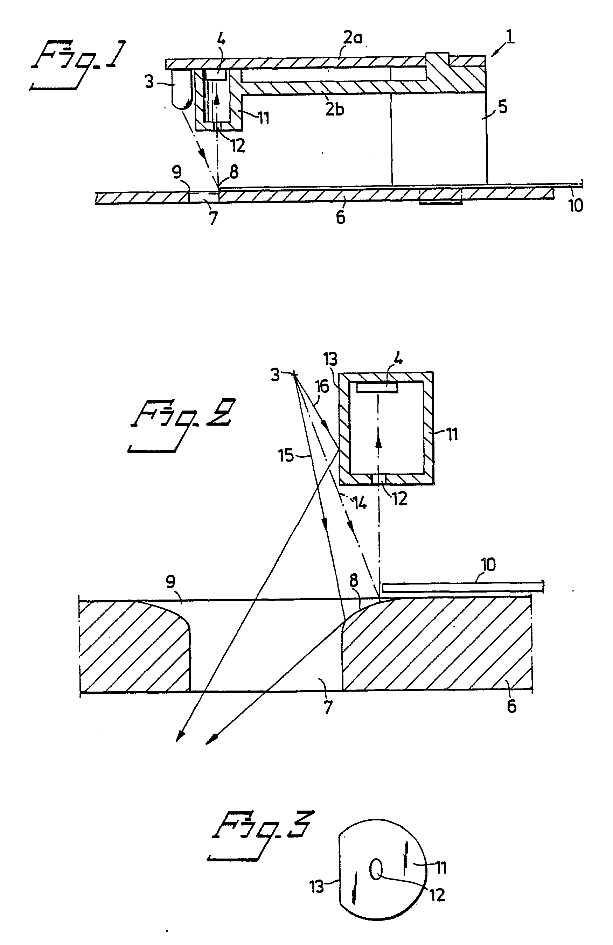

The invention will now be described in more detail with reference to the drawings, in which fig. 1 is a section of an optical sensor according to the invention in magnification, fig. 2 is a section of a part of a relative to Fig. 1 somewhat modified sensor according to the invention and Fig. 3 shows the opening side of the envelope of the radiation detecting element according to the embodiment of Fig. 2.

In Fig. 2 a sensor 1 is shown having a radiation emitting element 3 and a radiation detecting element 4 mounted on a supporting arm composed of two supporting arm sections 2a, 2b. The radiation emitting element is preferable a light emitting diode, while the radiation detecting element preferable is a photo transistor. The radiation detecting element is surrounded by an envelope 11 having a radiation transmitting opening 12. The envelope may, as shown in the Fig. 1, have a circular cylindrical shape but may also have a shape as for example shown in the Fig. 2—3 having a flat wall 13 facing the radiation emitting element 3. The arm consisting of two sections 2a, 2b is fixed to a supporting plate 6 via a spacer element 5. The supporting plate also operates as a guide plate. An opening 7 is provided in the supporting plate in an area below the light emitting element and the light detecting element 4. The opening 7 has two parallel convex reflecting edges 8, 9. A document, e.g., a sheet of paper or a bank-book is shown inserted and having its front edge straight before the convex edge 8.

The detection will now be explained in more detail below with reference to Fig. 2, in which the radiation path from a radiation emitting element 3, indicated by a X, is shown for three radiation beams 14, 15, 16 having different initial directions. For the position of the document shown the dash-dotted beam 14 is reflected towards the convex edge 8 and inclines towards the opening in the envelope 11 of the radiation detecting element 4. A beam 15 reflected towards the convex edge closer to the centre of the opening 7 continues down through the opening 7. A third beam 16 is reflected by the envelope 11 of the radiation detecting element and continuous further through the opening 7. A further large number of radiation paths, not shown, exist but they and the radiation paths 15 and 16 have in common that they generally do not reach the radiation detecting element. It is to be noted that a very narrow width of the reflector reflects the radiation towards the radiation detecting element.

In the shown embodiments the envelope of the radiation detecting element is disposed adjacent to the radiation emitting element in order to prevent radiation from directly reaching the section of the edge situated more distant from the centre of the opening than the section reflecting the radiation towards the radiation detecting element. However, this is not necessary, but the radiation may be allowed to reach the most distant section of the edge and then to be reflected towards an area to the right of the envelope 11.

When a document 10 crosses the direct radiation path between the convex reflecting edge 8 and the radiation detecting element 4, the last mentioned element detects a substantial change in level of the radiation inclining towards the radiation detecting element, so that information of the position of the document is obtained, a reference position. On the basis of the reference position the document may be transported to a desired position, for example to a suitable print position.

The opening 7 having the convex reflecting edge 8 may be obtained by means of, e.g., punching of an aperture in a metal plate or a similar element contained in a printer or equipment like that followed by a smoothing, e.g., electrolytic brightening.

The sensor is particularly suitable to be used for sensing of documents in a printer or similar equipment. However, it may be used to detect the position of other objects, e.g., the position of an arm in a mechanical construction.

## Claims

1. An optical sensor comprising a radiation emitting element, a guide plate, a reflector disposed in connection with the guide plate and a radiation detecting element which elements and reflector cooperate in order to determine a reference position or reference positions of an object, such as a paper sheet, which is transportable along the guide plate in the space between the guide plate and the two elements, the stepwise radiation variations detected by the radiation detecting element indicating the reference positions on the basis of which the object may be adjusted in position, characterized in that the reflector is provided in the guide plate and consists of a sunk convex reflecting edge in the guide plate.

2. An optical sensor as claimed in Claim 1, characterized in that the edge is a passage between a closed and an open area of the guide plate, preferably a limiting surface of an opening.

3. An optical sensor as claimed in Claim 2, characterized in that the radiation detecting element is surrounded by an envelope having an opening for the incident beams to be detected.

4. An optical sensor as claimed in Claim 3, characterized in that the envelope of the radiation detecting element is so disposed adjacent to the radiation emitting element that the radiation from the radiation emitting element is prevented from directly inclining towards a section of the convex edge situated more distant from the open area than a section reflecting the radiation towards the opening of the radiation detecting element.

5. An optical sensor as claimed in the Claims 3 or 4, characterized in that the opening of the envelope of the radiation detecting element has an elongated shape, the elongated direction being parallel to the longitudinal direction of the convex edge.

## Patentansprüche

1. Optischer Fühler mit einem Strahlung emittierenden Element, einer Führungsplatte, einem in Zusammenhang mit der Führungsplatte angebrachten Reflektor und einem Strahlung detektierenden Element, wobei die Element und der Reflektor zum Bestimmen einer Bezugsposition oder von Bezugspositionen eines Objekts, wie z.B. eines Papierbogens, zusammenarbeiten, der längs einer Führungsplatte im Raum zwischen der Führungsplatte und den beiden Elementen transportierbar ist, wobei die von Strahlung detektierenden Element detektierten gestuften Strahlungsänderungen die Bezugspositionen angeben, aufgrund deren das Objekt positionierbar ist, dadurch gekennzeichnet, daß der Reflektor in der Führungsplatte vorgesehen ist und aus einem eingelassenen konvexen Reflexionsrand in der Führungsplatte besteht.

2. Optischer Fühler nach Anspruch 1, dadurch gekennzeichnet, daß der Rand ein Übergang zwischen einem geschlossenen und einem offenen Gebiet der Führungsplatte ist, vorzugsweise eine Begrenzungsfläche einer Öffnung.

3. Optischer Fühler nach Anspruch 2, dadurch gekennzeichnet, daß das Strahlung detektierende Element von einer Hülle mit einer Öffnung für die zu detektierenden einfallenden Strahlen umgeben ist.

4. Optischer Fühler nach Anspruch 3, dadurch gekennzeichnet, daß die Hülle des Strahlung detektierenden Elements derart in der Nähe des Strahlung emittierenden Elements angeordnet ist, daß die Strahlung aus dem Strahlung detektierenden Element daran gehindert wird, direkt nach einem Teil der konvexen Rand abzulenken, der weiter vom offenen Gebiet liegt als ein Teil, der die Strahlung nach der Öffnung des Strahlung detektierenden Elements reflektiert.

5. Optischer Fühler nach Anspruch 3 oder 4, dadurch gekennzeichnet, daß die Öffnung der Hülle des Strahlung detektierenden Elements eine längliche Form hat, wobei die Verlängerungsrichtung zur Längsrichtung des konvexen Randes parallel verläuft.

**Revendications**

1. Palpeur optique comprenant un élément émetteur de rayonnement, une plaque de guidage, un réflecteur associé à la plaque de guidage et un élément détecteur de rayonnement, ces éléments de réflecteur coopérant pour déterminer une ou plusieurs positions de référence d'un objet tel qu'une feuille de papier, qui peut être transporté le long de la plaque de guidage dans l'espace existant entre la plaque de guidage et les deux éléments, les variations par paliers du rayonnement, détectées par l'élément détecteur de rayonnement, indiquant les positions de référence sur la base desquelles la position de l'objet peut être ajustée, caractérisé en ce que le réflecteur est prévu dans la plaque de guidage et est constitué d'un bord réfléchissant convexe s'enfonçant dans la plaque de guidage.

2. Palpeur optique suivant la revendication 1, caractérisé en ce que le bord est une transition entre une aire fermée et une aire ouverte de la plaque de guidage, de préférence une surface délimitant une ouverture.

3. Palpeur optique suivant la revendication 2, caractérisé en ce que l'élément détecteur de rayonnement est entouré par une enveloppe présentant une ouverture pour les rayons incidents à détecter.

4. Palpeur optique suivant la revendication 3, caractérisé en ce que l'enveloppe de l'élément détecteur de rayonnement est disposée près de l'élément émetteur de rayonnement d'une manière telle que le rayonnement provenant de l'élément émetteur de rayonnement ne puisse pas être envoyé directement vers une section du bord convexe plus distante de l'aire ouverte qu'une section réfléchissant le rayonnement vers l'ouverture de l'élément détecteur de rayonnement.

5. Palpeur optique suivant la revendication 3 ou 4, caractérisé en ce que l'ouverture de l'enveloppe de l'élément détecteur de rayonnement est de forme oblongue, son allongement étant parallèle à la direction longitudinale du bord convexe.

Fig. 1

Fig. 2

Fig. 3